# EUROPEAN PATENT APPLICATION

(11) **EP 2 891 868 A1**
(43) Date of publication of application: **08.07.2015**
(21) Application number: 13833646.6
(22) Date of filing: 26.08.2013
(51) Int. Cl.: G01G 21/28, G01G 23/06

(54) **PLATFORM SCALE PROVIDED WITH ENCLOSURE**

(30) Priority: 31.08.2012 JP 2012192540
(71) Applicant: Shinko Denshi Company Limited, Tokyo 113-0034 (JP)
(72) Inventor: SHINOZAKI Naoya, Tokyo 113-0034 (JP); NAITO Kazufumi, Tokyo 113-0034 (JP); TAKANAMI Tsubasa, Tokyo 113-0034 (JP)
(74) Representative: Heyer, Volker
(86) International application number: PCT/JP2013/072749
(87) International publication number: WO 2014/034612

(57) **Abstract**

A platform scale 20 provided with an enclosure 10 for surrounding the sides of the platform scale, wherein: the platform scale comprises shock-absorbing members that extend outward at multiple places of the feet which support the main body of the platform scale on a base; the enclosure is configured from only side walls 101 that surround the sides of the platform scale; the height of the side walls placed on the base is set to be lower than the height of the upper surface of the weighing tray 201 of the platform scale; and the side walls set on the base do not touch portions of the platform scale other than the shock-absorbing members.

## Description

### Field of Invention

The present invention relates to a platform scale provided with enclosure for surrounding sides of the scale to make weight measurements without causing any interference from wind or the like.

### Background of Invention

A platform scale is used for weighing relatively heavy objects such as, for example, drums filled with bath or cylinders filled with gas at various production cites.

In recent years, there are increased needs for accurately measuring weight of heavy objects at various production cites. A platform scale to meet such needs is disclosed in the following patent document.

### Prior Art Document:

### Patent Document:

Patent Document 1: WO 2011/001875

### Summary of Invention:

### Problems Solved by the Invention:

However, if accuracy of a platform scale improves, there causes flicker in the reading of the platform scale due to wind at the measurement site. Such undesirable effect is caused from wind blowing into the gap between the platform scale and a flower on which the platform scale is plated, thereby lifting the weighing tray.

Moreover, if anything may collide with the platform scale that is placed on a floor, there is a possibility that the zero point of the high precision platform scale is shifted by the shock.

In consideration of the above circumstances, the present invention is intended to provide a platform scale capable of stably measuring weight of an object without any interference from wind and/or shock.

### Means to Solve the Problem:

The present invention is a platform scale provided with enclosure for surrounding all sides of the scale and is characterized in that the platform scale comprises shock-absorbing members at plural locations corresponding to feet for supporting the main body of the platform scale on a base and extending outwardly for buffering the enclosure and that the enclosure comprises side walls for surrounding all sides of the platform scale so that any portion of the platform scale does not touch the side walls placed on the base except the shock-absorbing members.

There causes no force to lift the weighing tray by wind because the enclosure closes all sides of the platform scale. Moreover, the enclosure prevents shock to be applied sideward to the platform scale.

In the platform scale of the present invention, it is preferable to set the height of the side walls of the enclosure placed on the base lower than the height of the top surface of the weighing tray.

By setting the height of the side walls of the enclosure lower than the top surface of the weighing tray, the enclosure does not interfere with the weighing tray of the platform scale placed on a floor when placing an object to be weighed on the weighing tray.

In the platform scale of the present invention, it is also preferable that the enclosure is made from stainless steel.

A heavy enclosure is advantageous to prevent any sideward shock to the platform scale.

In the platform scale of the present invention, it is preferable that shock-absorbing members provided at feet are made from buffering material to reduce shock.

If shock is applied to the enclosure to such an extent that the feet touch the enclosure by way of the buffering material of the shock-absorbing members, shock to be conducted to the feet is reduced by the buffering material.

Also, in the platform scale of the present invention, the shock-absorbing members provided at feet may be made from metal so that the metal shock-absorbing members touch the buffering materials formed with the enclosure when contacting with the enclosure.

Even such arrangement enables to ease shock to the platform scale when shock is applied to the enclosure.

Moreover, in the platform scale of the present invention, a wind shielding member made from transparent plastic material can be provided on the base outside the enclosure in such a manner that a sufficient space to place an object to be weighed can be placed on the weighing tray and that at least three directions of the space are covered with the wind shielding member.

The provision of the wind shielding member is effective for further reducing adverse effect of wind upon to the measurements.

It is also possible that the wind shielding member is provided with a door to close the open side of the space above the weighing tray.

Wind causes no adverse effect upon the weight measurements by closing three sides and the top of the space above the weighing tray with the wind shielding member and also closing the remaining one side with the door.

### Advantage of the Invention

The platform scale of the present invention is capable of suppressing flicker in measurements due to wind and also preventing any shift of zero point due to shock, thereby achieving stable weight measurements.

### Brief Description of the Drawings

- Fig. 1: A perspective view of the platform scale provided with enclosure according to an embodiment of the present invention;
- Fig. 2: A perspective view of the enclosure in Fig. 1;
- Fig. 3: A perspective view of the platform scale in Fig. 1;
- Fig. 4: A perspective view of the platform scale in Fig. 3 with the weighing tray removed;
- Fig. 5: Views to show shock-absorbing members of the platform scale in Fig. 4;
- Fig. 6: A plan view of the platform scale in Fig. 3;
- FIG. 7: A plan view of the platform scale provided with enclosure in Fig. 1;
- FIG. 8: A perspective view of the platform scale provided with enclosure in Fig. 1 further attaching the wind shielding member;
- FIG. 9: A perspective view of the wind shielding member in Fig. 8;
- FIG. 10: A perspective view of the wind shielding member provided with a door.

### Embodiments to Implement the Invention

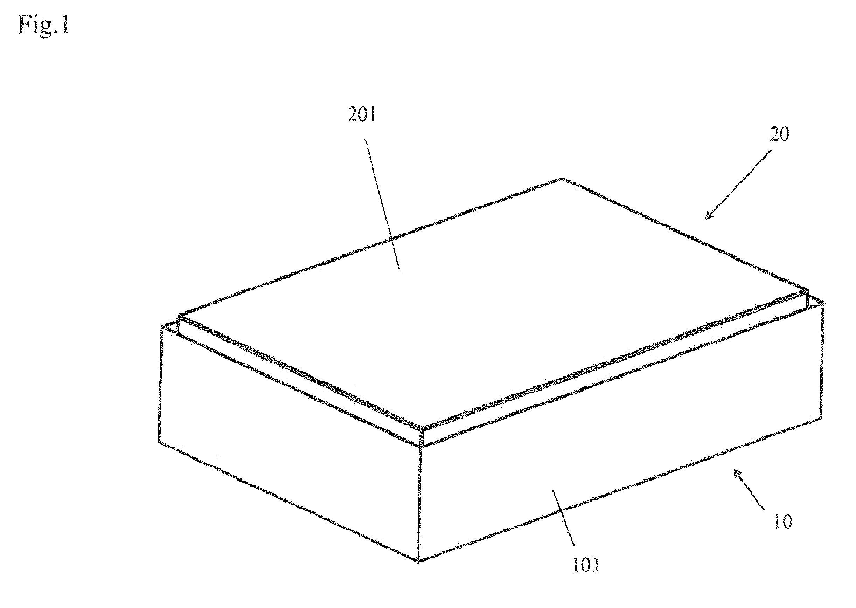

Fig. 1 shows a platform scale 20 provided with an enclosure 10 according to an embodiment of the present invention.

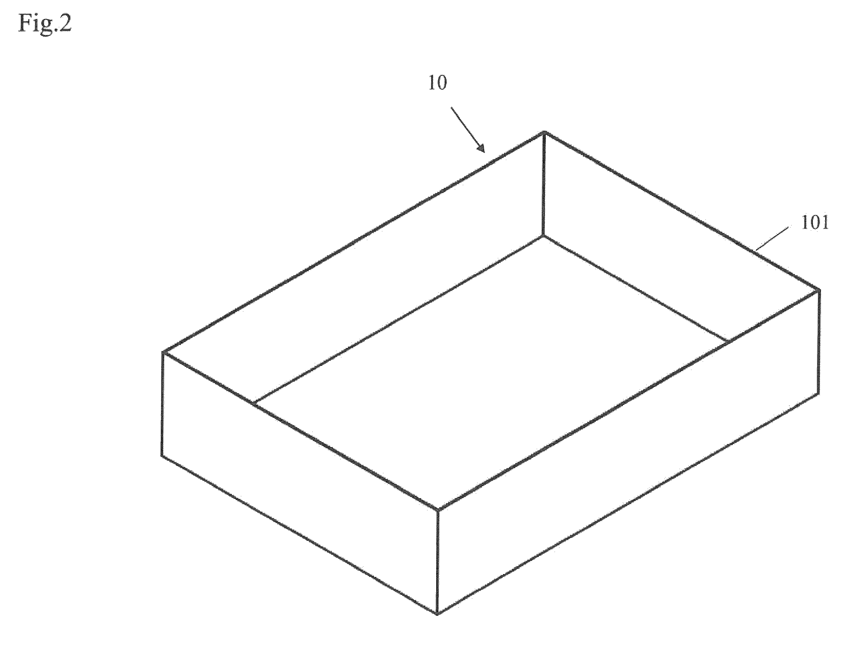

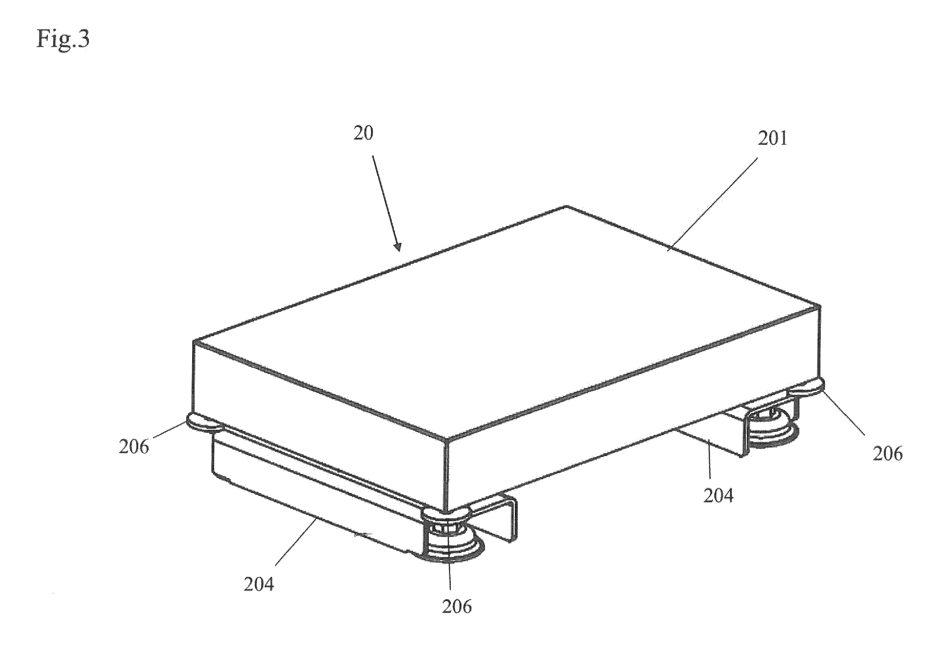

As shown in Fig. 2, the enclosure 10 is a rectangular frame member made from stainless steel comprising only side walls 101 and open at both bottom and top. As best shown in Fig. 1, the height of the side walls 101 is set slightly lower than the upper position of a weighing tray 201 of the platform scale 20. It is necessary that the difference in height between the side walls 101 and the upper surface of the weighing tray 201 is less than the width of the side surface of the weighing tray 201 (see Fig. 3).

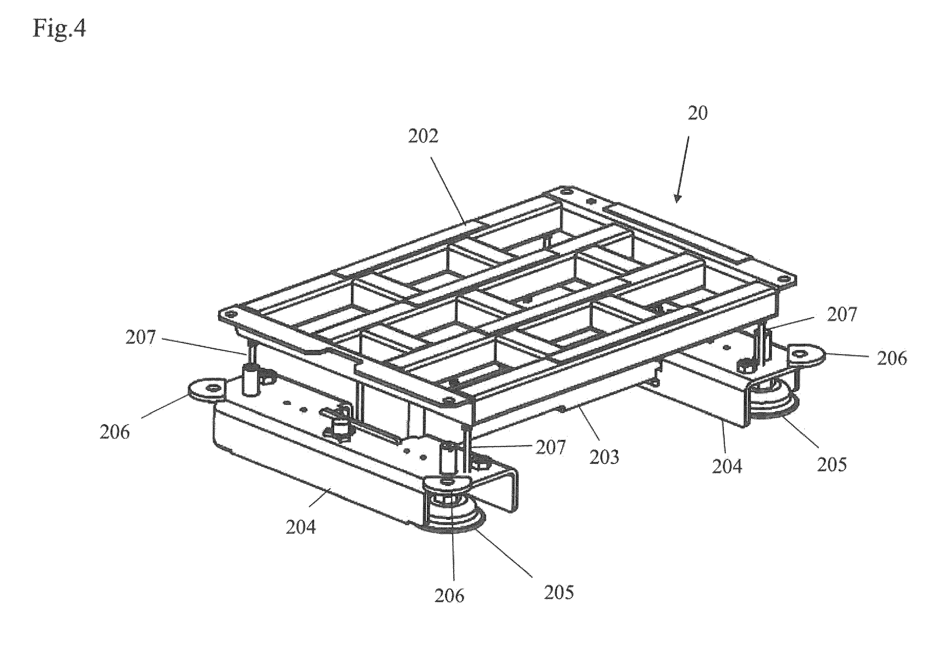

Fig. 3 shows the platform scale 20 on which the weighing tray 201 is placed, while Fig. 4 shows the platform scale 20 without the weighing tray 201.

The platform scale 20 comprises a frame 202 for supporting the weighing tray 201, a weight detection unit 203 in which a weighing sensor is accommodated, feet 204 for supporting an outer shell case of the weight detection unit 203, adjusters 205 for adjusting the height of the feet 204 and shock-absorbing members 206 located at corners of the feet 204.

The frame 202 moves downwardly by a weight placed on the weighing tray 201. The downward movement is translated to the weighing sensor accommodated in the weight detection unit 203 for detecting by the weighing sensor the weight applied onto the weighing tray 201. The feet 204 are formed with stopper pins 207 for limiting the amount of downward movement of the frame 202.

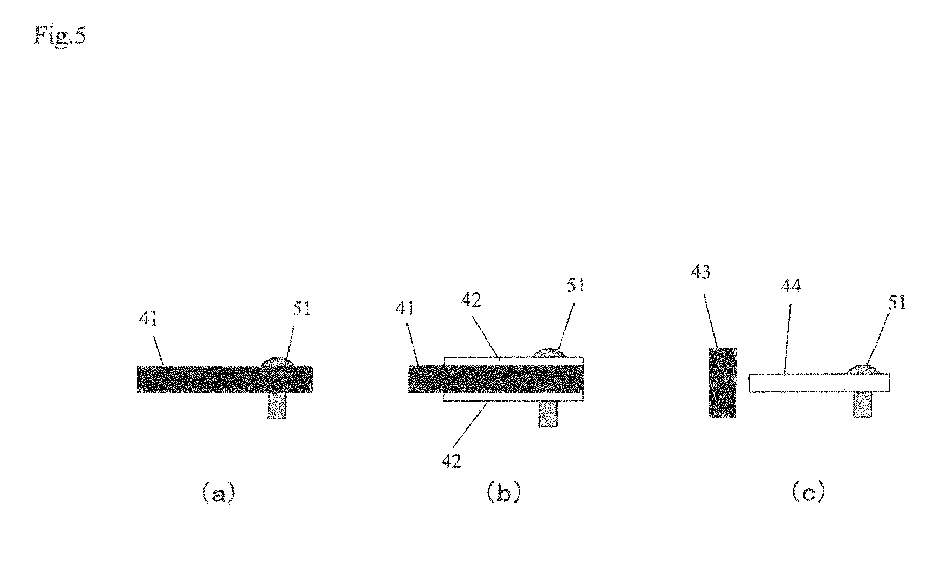

The shock-absorbing members 206 fixedly mounted at the feet 204 extend outwardly from the feet 204. The shock-absorbing members 206 are provided for reducing shock of the enclosure 10. For this end, as shown in Fig. 5 (a), plate-like shock-absorbing members 41 made from rubber plate or the like are directly mounted onto the feet 204 using mounting screws 51. Alternatively, as shown in Fig. 5 (b), both surfaces of a shock-absorbing plate 41 may be covered with metal plates 42 except end portion and the portion covered with the metal plates 42 is fixedly mounted onto the feet 204 using a mounting screw 51.

It is also possible, as shown in Fig. 5 (c), that a thick metal plate 44 is fixedly mounted onto the feet as the shock-absorbing member 206 and a shock-absorbing member 43 is provided at the enclosure 10 so that the tip of the metal plate 44 abuts against the shock-absorbing member 43.

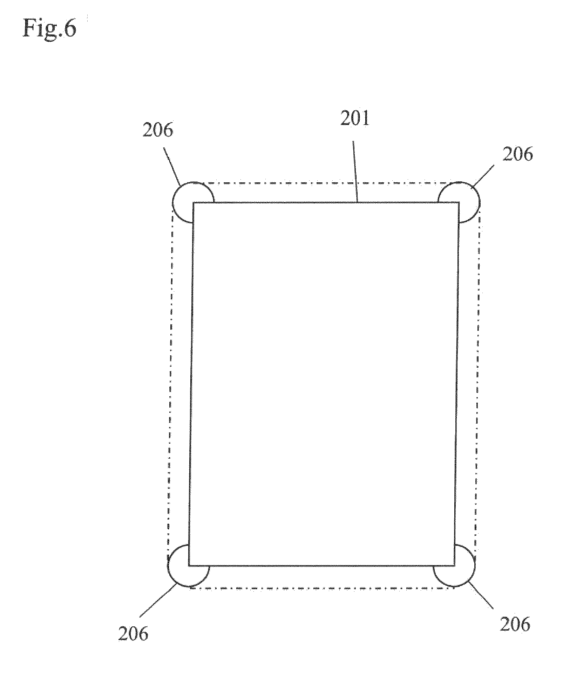

Fig. 6 shows a plan view of the platform scale and straight lines (chain lines) in contact with the outer periphery of a plurality of the shock-absorbing members 206 define outer edges of the platform scale 20.

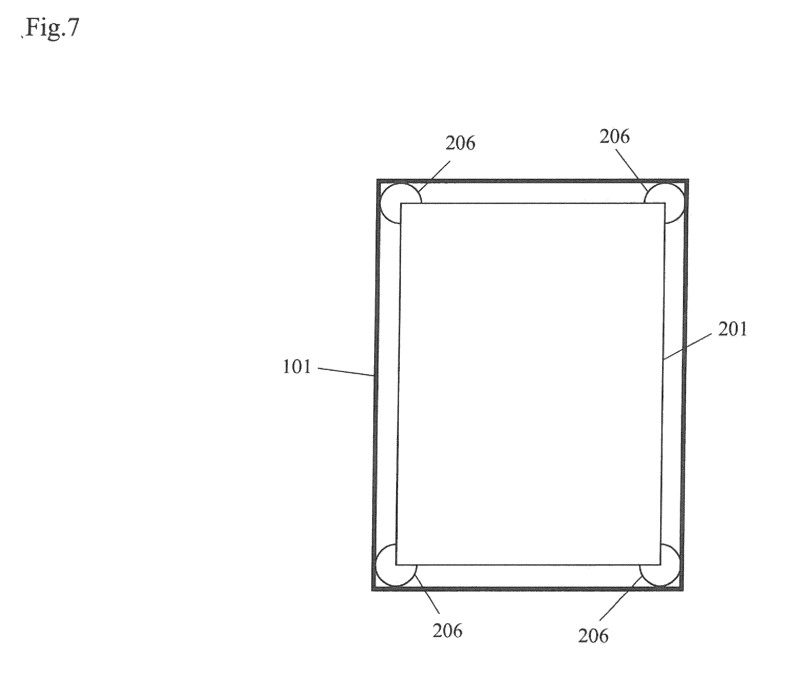

Also shown in Fig. 7 is a position relationship between the side walls 101 of the enclosure 10 and the platform scale 20. Apparently, the enclosure 10 does not contact with any part of the platform scale 20 except the shock-absorbing members 206.

When the platform scale 20 and the enclosure 10 are placed on a floor, any wind blowing toward the platform scale 20 in the horizontal direction will be interrupted by the enclosure 10, thereby causes no force to lift the weighing tray 201. As a result, flicker in weighing measurements is effectively reduced.

Additionally, the enclosure 10 plays an important role to prevent the platform scale from any shock in the horizontal direction. Since most shocks are unable to vibrate or move the enclosure 10 that is made from heavy stainless steel, the platform scale 20 remains unaffected by the shock. Even if a relatively large shock may be applied to vibrate or move the enclosure 10, shock to be actually applied to the feet 204 of the platform scale 20 from the enclosure 10 is reduced because large part of the shock is absorbed by the shock-absorbing members 206. It is to be noted that no part of the side walls 101 of the enclosure 10 contact with the weighing tray 201 even in such circumstance.

Also, since the height of the side walls 101 of the enclosure 10 is set to be lower than the top position of the weighing tray 201, the enclosure 10 is essentially no obstacle when placing an object to be weighed on the weighing tray 201.

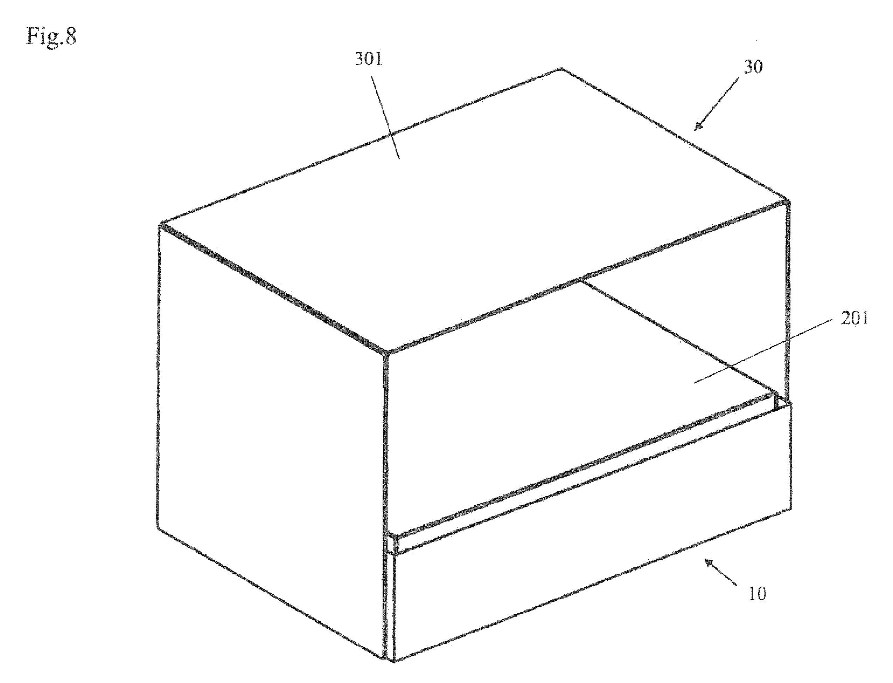

Fig. 8 shows the platform scale 20 provided with the enclosure 10 and an additional wind shielding member 30 made from a transparent plastic material.

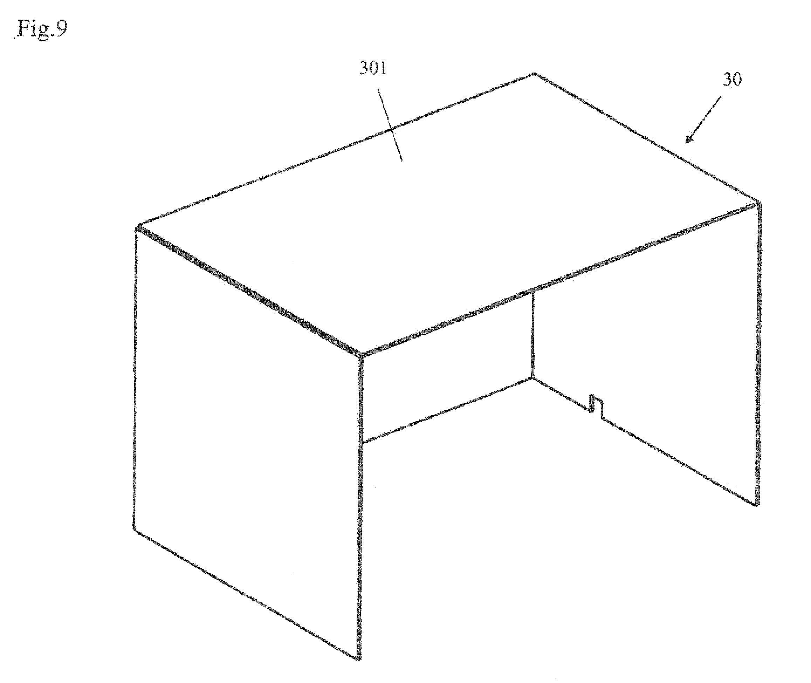

As best shown in Fig. 9, the wind shielding member 30 is a rectangular body that is open at both bottom and front. Both depth and width of the rectangular body are essentially identical to those of the enclosure 10 but the length of the rectangular body, i.e., the height of the top surface 301 of the rectangular body is significantly higher than the side walls 101 of the enclosure 10 and the height to the top surface of the weighing tray 201.

As a result, when the wind shielding member 30 is placed on the floor along the outer side surfaces of the enclosure 10 of the platform scale 20, a space is formed between the top surface 301 of the wind shielding member 30 and the weighing tray 201, wherein the space is closed in three directions but open only at the front.

The open front portion of the space is wide enough for enabling to place an object to be weighed on the weighing tray 201 while the wind shielding member 30 is in position.

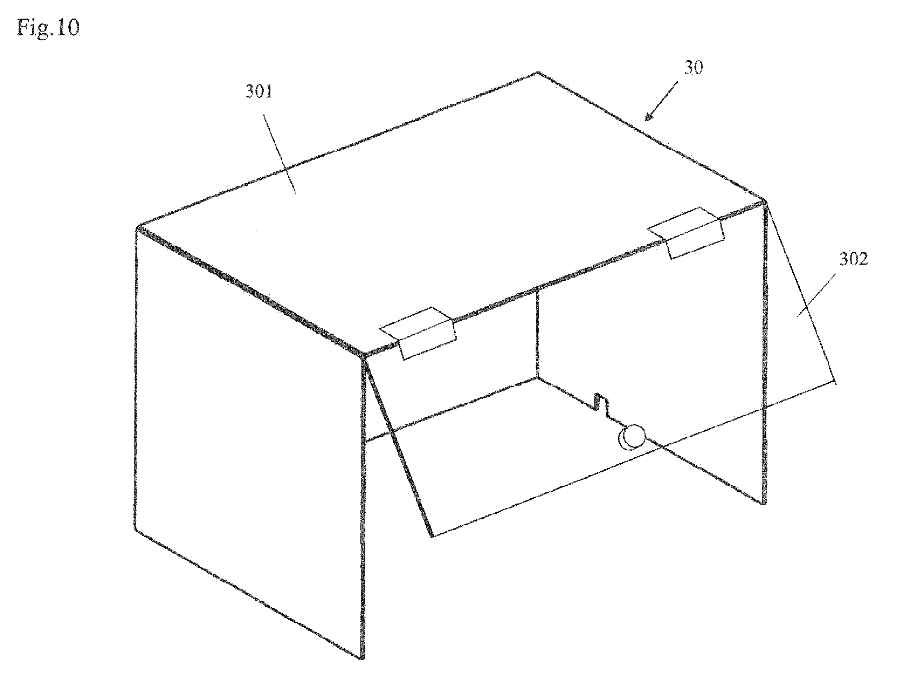

It is also possible that the wind shielding member 30 is formed with a transparent door 302 to cover the front portion of the wind shielding member as shown in Fig. 10 and to fold it back at the top surface 301 for enabling to place an object to be weighed on the weighing tray 201 from the open front portion. Then, the front door 301 is closed for making measurement.

It is of course possible that the door may comprise folding single door or double doors open in horizontal directions.

Provision of such wind shielding member 30 further improves measurement accuracy of the platform scale 20 by significantly reducing adverse effect of wind blowing not only below but above the weighing tray 201 of the platform scale 20.

It is to be noted that embodiments that are described hereinabove are only examples, thus the present invention should not be restricted to such particular examples.

The enclosure is not restricted to the one for a large size platform scale to be placed on a floor or the like but can also be applied to a small table top type platform scale. In case of a table top type scale, the height of the side walls of the enclosure may be slightly higher than the top surface of the weighing tray because there is essentially no interruption in placing an object to be weighed on the weighing tray even if the side walls are taller than the weighing tray.

### Industrial applicability

Since reduction in measurement accuracy due to wind and/or shock can be minimized, the platform scale provided with enclosure according to the present invention finds wide applications at production cites or the like where there are strong needs for high precision platform scales.

### Description of reference numerals

- 10:: enclosure
- 20:: platform scale
- 30:: wind shielding member
- 41:: plate-like shock-absorbing member
- 42:: metal plate
- 43:: shock-absorbing member
- 44:: metal plate
- 51:: mounting screw
- 101:: side walls
- 201:: weighing tray
- 202:: frame
- 203:: weight detection unit
- 204:: feet
- 205:: adjuster
- 206:: shock-absorbing member
- 207:: stopper pin
- 301:: top surface of wind shielding member
- 302:: door

## Claims

1. A platform scale (20) provided with enclosure (10) for surrounding sides of the platform scale: **characterized in that**
the platform scale comprises shock-absorbing members (206) at a plurality of feet (204) for supporting the main body of the platform scale on a base and extending outwardly for buffering when contacting with the enclosure;
the enclosure comprises side walls (101) for surrounding the outer periphery of the platform scale; and
the side walls do not contact with any part of the platform scale except the shock-absorbing members when placed on the base.

2. A platform scale provided with enclosure of claim 1, wherein the height of the side walls of the enclosure placed on the base is set to be lower than the height of the top surface of the weighing tray (201) of the platform scale.

3. A platform scale provided with enclosure of claim 1 or 2, wherein the enclosure is made from stainless steel.

4. A platform scale provided with enclosure of either one of claims 1-3, wherein the shock-absorbing members provided at the feet include shock-absorbing material (41) for reducing shock.

5. A platform scale provided with enclosure of either one of claims 1-3, wherein the shock-absorbing members provided at the feet are made from metal(44) and arranged so that the metal contacts with shock-absorbing members (43) provided at the enclosure when contacting with the enclosure.

6. A platform scale provided with enclosure of either one of claims 1-5, further comprising a wind shielding member (30) made from transparent plastic to be placed on the base outside the enclosure, wherein a sufficient space is formed between the weighing tray and the top surface (301) of the wind shielding member for enabling to place an object to be weighed on the weighing tray and at least three sides and the top of the space are covered by the wind shielding member when it is placed on the base along the outer sides of the enclosure.

7. A platform scale provided with enclosure of claim 6, wherein the wind shielding member is formed with a door (302) to close an open side of the space.
